# EUROPEAN PATENT APPLICATION

(11) **EP 4 683 198 A1**
(43) Date of publication of application: **21.01.2026**
(21) Application number: 25157506.4
(22) Date of filing: 12.02.2025
(51) Int. Cl.: H02M 1/42, H02M 3/00, H02M 7/217

(54) **SINGLE-STAGE AC-TO-DC RESONANT CONVERTER**

(30) Priority: 19.07.2024 IN 202411055361; 20.11.2024 CN 202411661347
(71) Applicant: DELTA ELECTRONICS, INC., Taoyuan City 320023 (TW)
(72) Inventor: ROY, Shamibrota Kishore, 560099 Bangalore, Karnataka (IN); V, Sreehari Venugopal, 560099 Bangalore, Karnataka (IN); CHEN, Ying-Fan, 320023 Taoyuan City (TW)
(74) Representative: 2K Patentanwälte Blasberg Kewitz & Reichel

(57) **Abstract**

A single-stage AC-to-DC resonant converter (100) is used to convert a three-phase AC power source (Pac) into a DC power source (Pdc). The single-stage AC-to-DC resonant converter (100) includes a primary-side circuit (A), a resonant circuit (B), and a secondary-side circuit (C). The primary-side circuit (A) includes three primary-side switch circuits (1), and each primary-side switch circuit (1) is coupled to one phase (R, Y, B) of the three-phase AC power source (Pac). The resonant circuit (B) includes three transformers (T), and primary-side windings (Wp) of the transformers (T) are respectively coupled to the primary-side switch circuits (1), and secondary-side windings (Ws) of the transformers (T) are coupled to the secondary-side circuit (C).

## Description

### BACKGROUND

### Technical Field

The present disclosure relates to an AC-to-DC resonant converter, and more particular to a single-stage AC-to-DC resonant converter.

### Description of Related Art

The statements in this section merely provide background information related to the present disclosure and do not necessarily constitute prior art.

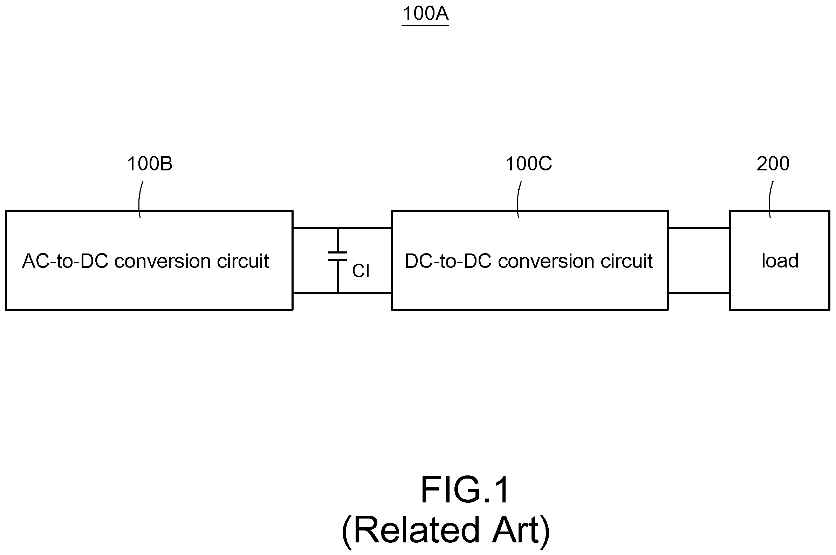

Due to the power supply or battery charging requirements of various electronic devices, AC-to-DC converters have always been indispensable power conversion equipment. Traditional AC-to-DC converters are usually two-stage circuit structures as shown in FIG. 1. Specifically, the conventional AC-to-DC converter 100A includes an AC-to-DC conversion circuit 100B, an intermediate capacitor CI, and a DC-to-DC conversion circuit 100C. The AC-to-DC conversion circuit 100B converts the single-phase or three-phase AC power source into an intermediate power, and then stores the intermediate power in the intermediate capacitor CI. The DC-to-DC conversion circuit 100C uses the intermediate power stored in the intermediate capacitor CI as an input source, and converts it into an output power of a specific voltage level to supply power (or charge) the load 200 coupled to the rear end.

On the other hand, if an input power source of the AC-to-DC converter 100A is a three-phase AC power source, each phase usually needs to use complete conversion circuits for power conversion. Therefore, most three-phase AC-to-DC converters 100A will include three AC-to-DC conversion circuits 100B, intermediate capacitors CI, and DC-to-DC conversion circuits 100C. Since the intermediate capacitor CI is generally used to store a large amount of power and requires a large configuration space, the size of the AC-to-DC converter 100A will be too large, which is not conducive to miniaturization design.

Therefore, how to design a single-stage AC-to-DC resonant converter to use a single-stage circuit structure to replace the traditional two-stage circuit structure has become a critical topic in this field.

### SUMMARY

In order to solve the above-mentioned problems, the present disclosure provides a single-stage AC-to-DC resonant converter. The single-stage AC-to-DC resonant converter is used to convert a three-phase AC power source into a DC power source. The single-stage AC-to-DC resonant converter includes a primary-side circuit, a resonant circuit, and a secondary-side circuit. The primary-side circuit includes three primary-side switch circuits, and each primary-side switch circuit is coupled to one phase of the three-phase AC power source. Each primary-side switch circuit includes a rectifying circuit and a switching circuit. The rectifying circuit includes rectifying bridge arms and a capacitor connected in parallel. The switching circuit is coupled to the capacitor. The resonant circuit includes three transformers, primary-side windings of the transformers are respectively coupled the switching circuits of the primary-side switch circuits, and secondary-side windings of the transformers form a secondary-side common winding. The secondary-side circuit includes a secondary-side switch circuit, and the secondary-side switch circuit is coupled to the secondary-side common winding.

In order to solve the above-mentioned problems, the present disclosure provides a single-stage AC-to-DC resonant converter. The single-stage AC-to-DC resonant converter is used to convert a three-phase AC power source into a DC power source. The single-stage AC-to-DC resonant converter includes a primary-side circuit, a resonant circuit, and a secondary-side circuit. The primary-side circuit includes three primary-side switch circuits, and each primary-side switch circuit includes a filter circuit and a switching circuit. The filter circuit is coupled to one phase of the three-phase AC power source. The switching circuit is coupled to the filter circuit. The resonant circuit includes three transformers, primary-side windings of the transformers are respectively coupled the switching circuits of the primary-side switch circuits, and secondary-side windings of the transformers form a secondary-side common winding. The secondary-side circuit includes a secondary-side switch circuit, and the secondary-side switch circuit is coupled to the secondary-side common winding.

In order to solve the above-mentioned problems, the present disclosure provides a single-stage AC-to-DC resonant converter. The single-stage AC-to-DC resonant converter is used to convert a three-phase AC power source into a DC power source. The single-stage AC-to-DC resonant converter includes a primary-side circuit, a resonant circuit, and a secondary-side circuit. The primary-side circuit includes three primary-side switch circuits, each primary-side switch circuit is coupled to one phase of the three-phase AC power source, and each primary-side switch circuit includes a switching circuit. The resonant circuit includes three transformers, primary-side windings of the transformers respectively are coupled to the switching circuits of the primary-side switch circuits. The secondary-side circuit includes three secondary-side switch circuits, input terminals of the secondary-side switch circuits are coupled to secondary-side windings of the transformers, and output terminals of the secondary-side switch circuits are coupled to each other in parallel.

The main purpose and effect of the present disclosure is that since a single-stage circuit structure is used to replace the traditional two-stage circuit structure, and the manner of converting three-phase input into output power mainly uses multiple switches for switching, the single-stage AC-to-DC resonant converter of the present disclosure does not require an intermediate energy storage component.

It is to be understood that both the foregoing general description and the following detailed description are exemplary, and are intended to provide further explanation of the present disclosure as claimed. Other advantages and features of the present disclosure will be apparent from the following description, drawings, and claims.

### BRIEF DESCRIPTION OF DRAWINGS

The present disclosure can be more fully understood by reading the following detailed description of the embodiment, with reference made to the accompanying drawing as follows:
FIG. 1 is a block diagram of a conventional two-stage AC-to-DC converter.
FIG. 2 is a circuit diagram of a single-stage AC-to-DC resonant converter according to a first embodiment of the present disclosure.
FIG. 3 is a circuit diagram of the single-stage AC-to-DC resonant converter according to a second embodiment of the present disclosure.
FIG. 4 is a circuit diagram of the single-stage AC-to-DC resonant converter according to a third embodiment of the present disclosure.
FIG. 5 is a circuit diagram of the single-stage AC-to-DC resonant converter according to a fourth embodiment of the present disclosure.
FIG. 6 is a circuit diagram of the single-stage AC-to-DC resonant converter according to a fifth embodiment of the present disclosure.
FIG. 7 is a circuit diagram of the single-stage AC-to-DC resonant converter according to a sixth embodiment of the present disclosure.
FIG. 8 is a circuit diagram of the single-stage AC-to-DC resonant converter according to a seventh embodiment of the present disclosure.
FIG. 9 is a circuit diagram of the single-stage AC-to-DC resonant converter according to an eighth embodiment of the present disclosure.
FIG. 10 is a circuit diagram of the single-stage AC-to-DC resonant converter according to a ninth embodiment of the present disclosure.
FIG. 11 is a circuit diagram of the single-stage AC-to-DC resonant converter according to a tenth embodiment of the present disclosure.
FIG. 12 is a circuit diagram of the single-stage AC-to-DC resonant converter according to an eleventh embodiment of the present disclosure.
FIG. 13 is a circuit diagram of the single-stage AC-to-DC resonant converter according to a twelfth embodiment of the present disclosure.
FIG. 14 is a circuit diagram of the single-stage AC-to-DC resonant converter according to a thirteenth embodiment of the present disclosure.
FIG. 15 is a circuit diagram of the single-stage AC-to-DC resonant converter according to a fourteenth embodiment of the present disclosure.
FIG. 16 is a circuit diagram of the single-stage AC-to-DC resonant converter according to a fifteenth embodiment of the present disclosure.
FIG. 17 is a circuit diagram of the single-stage AC-to-DC resonant converter according to a sixteenth embodiment of the present disclosure.
FIG. 18 is a circuit diagram of the single-stage AC-to-DC resonant converter according to a seventeenth embodiment of the present disclosure.

### DETAILED DESCRIPTION

Reference will now be made to the drawing figures to describe the present disclosure in detail. It will be understood that the drawing figures and exemplified embodiments of present disclosure are not limited to the details thereof.

The single-stage AC-to-DC resonant converter disclosed in the present disclosure is different from the conventional two-stage AC-to-DC converter shown in FIG. 1, i.e., the conventional two-stage AC-to-DC converter needs an intermediate energy storage component in the middle to store the energy of the DC power source, and convert the DC power source into an output power source. Specifically, the single-stage AC-to-DC resonant converter disclosed in the present disclosure is suitable for three-phase/single-phase unfolder topology, mainly for matrix converter topology applications. The matrix converter mainly uses multiple switches to convert three-phase input power into output power. In particular, matrix converters, like voltage-source and current-source inverters, are divided into several stages to handle the conversion of voltage and current. However, there is no intermediate energy storage component in the DC link, and therefore the conversion of voltage and current can be completed in the one-stage (single-stage) converter. Therefore, the capacitance between the three-phase AC power source R, Y, B and the output capacitor Co is not mainly used to store energy, but for filtering. Therefore, the single-stage AC-to-DC resonant converter can process the three-phase AC power source R, Y, B phase by phase.

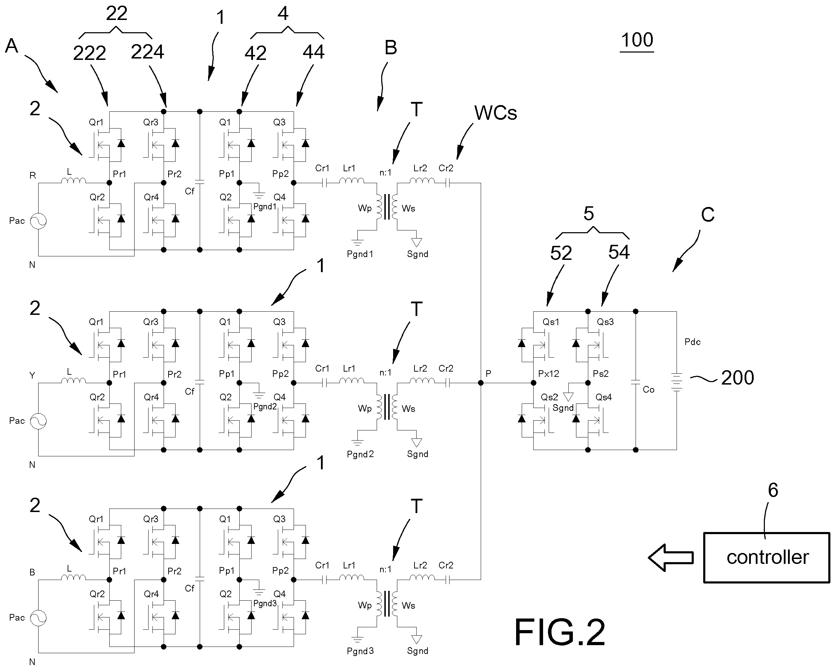

Please refer to FIG. 2, which shows a circuit diagram of a single-stage AC-to-DC resonant converter according to a first embodiment of the present disclosure, and also refer to FIG. 1. The single-stage AC-to-DC resonant converter 100 uses a circuit structure that composes of an inductor and a capacitor to form a resonant tank (such as, but not limited to LC, CLLC, etc.), and is particularly suitable for the circuit structure of dual-active-bridge (DAB) and series resonant dual-active-bridge (SR DAB). That is, the single-stage AC-to-DC resonant converter 100 of the present disclosure can process the three-phase AC power source R, Y, B in a phase-by-phase manner to convert the DC power source Pdc, and the voltage level of the converted DC power source Pdc can be adjusted higher or lower by a controller 6.

Referring again to FIG. 2, the single-stage AC-to-DC resonant converter 100 (hereinafter abbreviated as "resonant converter 100") is used to convert a three-phase AC power source R, Y, B into a DC power source Pdc. The resonant converter 100 includes a primary-side circuit A, a resonant circuit B, and a secondary-side circuit C. The primary-side circuit A includes three primary-side switch circuits 1, and each primary-side switch circuit 1 includes a rectifying circuit 2 and a switching circuit 4. The rectifying circuit 2 includes rectifying bridge arms 22 and a capacitor Cf connected in parallel, and the switching circuit 4 is coupled to the capacitor Cf. As mentioned above, the capacitor Cf is not an intermediate energy storage component (that is, it is not a component that can be used to store large amounts of electricity, such as an electrolytic capacitor), and therefore it is not mainly used to store energy, but for filtering.

The resonant circuit B mainly includes three resonant tanks and three transformers T. The resonant tank may vary depending on the circuit structures of the resonant converter 100. In particular, the present disclosure focuses on the circuit structure of SR DAB, that is, the resonant tank includes a primary-side resonant tank and a secondary-side resonant tank. The primary-side resonant tank includes a resonant inductor Lr1 and a resonant capacitor Cr1 connected in series, and the secondary-side resonant tank includes a resonant inductor Lr2 and a resonant capacitor Cr2 connected in series. Each transformer T includes a primary-side winding Wp and a secondary-side winding Ws, and the primary-side winding Wp is coupled to the switching circuit 4 of the primary-side switch circuit 1. When the resonant converter 100 is the circuit structure of SR DAB, the secondary-side winding Ws and the secondary-side resonant tank form a secondary-side common winding WCs. If the circuit structure of the resonant converter 100 does not include the secondary-side resonant tank, the secondary-side winding Ws forms the secondary-side common winding WCs. In one embodiment, the turns ratio between the primary-side winding Wp and the secondary-side winding Ws is represented by n: 1, but is not limited thereto, that is, it can be any turns ratio that can be implemented in the resonant converter 100.

The secondary-side circuit C is different from the primary-side circuit A in that it only includes a secondary-side switch circuit 5, and the secondary-side switch circuit 5 is coupled to the secondary-side common winding WCs and a load 200. In particular, the load 200 may preferably be a battery, especially an electric vehicle battery, but is not limited thereto. The resonant converter 100 further includes a controller 6. The controller 6 provides a control signal Sc to control the primary-side circuit A and the secondary-side circuit C to divide the three-phase AC power source R, Y, B into several stages to process the conversion of voltage and current and convert it into the DC power source Pdc.

Moreover, as shown in FIG. 2, in addition to the rectifying bridge arms 22 and the capacitor Cf connected in parallel, the rectifying circuit 2 further includes an inductor L, and the inductor L is also used for filtering. The inductor L of each primary-side switch circuit 1 is coupled to one phase (R, Y, B) of the three-phase AC power source Pac, and the rectifying bridge arms 22 include a first rectifying bridge arm 222 and a second rectifying bridge arm 224 connected to the capacitor Cf in parallel. A first terminal of the first rectifying bridge arm 222 is coupled to the inductor L, and a second terminal of the first rectifying bridge arm 222 is coupled to a second terminal of the three-phase AC power source Pac.

Taking the first rectifying bridge arm 222 coupled to the inductor L as an example. Specifically, the first rectifying bridge arm 222 includes a first rectifying switch Qr1 and a second rectifying switch Qr2 connected in series, and a first rectifying node Pr1 is formed between the first rectifying switch Qr1 and the second rectifying switch Qr2. Similarly, the second rectifying bridge arm 224 includes a third rectifying switch Qr3 and a fourth rectifying switch Qr4 connected in series, and a second rectifying node Pr2 is formed between the third rectifying switch Qr3 and the fourth rectifying switch Qr4. Therefore, the first rectifying node Pr1 is coupled to the other terminal of the inductor L, and the second rectifying node Pr2 is coupled to a neutral terminal N of the three-phase AC power source R, Y, B.

The switching circuit 4 includes a first switching bridge arm 42 and a second switching bridge arm 44, and the first switching bridge arm 42 and the second switching bridge arm 44 are connected to the capacitor Cf in parallel. The first switching bridge arm 42 includes a first switching switch Q1 and a second switching switch Q2 connected in series, and a first primary-side node Pp1 is formed between the first switching switch Q1 and the second switching switch Q2. Similarly, the second switching bridge arm 44 includes a third switching switch Q3 and a fourth switching switch Q4 connected in series, and a second primary-side node Pp2 is formed between the third switching switch Q3 and the fourth switching switch Q4. One of the first primary-side node Pp1 and the second primary-side node Pp2 is coupled to a primary-side ground terminal Pgnd1, Pgnd2, Pgnd3 (here represented by the first primary-side node Pp1), and the other is coupled to the primary-side winding Wp of the transformer T. In particular, each primary-side switch circuit 1 is coupled to different primary-side ground terminals Pgnd1, Pgnd2, Pgnd3, and therefore each first primary-side node Pp1 is coupled to different primary-side ground terminals Pgnd1, Pgnd2, Pgnd3 respectively. In particular, the coupling relationships in the following implementations are similar, and will not be described again here.

Since one terminal of the primary-side winding Wp is also coupled to the primary-side ground terminals Pgnd1, Pgnd2, Pgnd3, two terminals of the primary-side winding Wp are coupled to the first primary-side node Pp1 and the second primary-side node Pp2 respectively. Moreover, the resonant inductor Lr1 and the resonant capacitor Cr1 of the primary-side resonant tank may be coupled between the first primary-side node Pp1 and one terminal of the primary-side winding Wp as shown in FIG. 2, or coupled between the primary-side winding Wp and the primary-side ground terminal Pgnd1, Pgnd2, Pgnd3. In addition, the primary-side resonant tank also has many structures (such as but not limited to the structure with a single resonant inductor) and feasible coupling manners (such as but not limited to, the resonant inductor Lr1 and the resonant capacitor Cr1 are respectively configured to two terminals of the primary-side winding Wp, and will not be described individually here.

On the secondary side shown in FIG. 2, the secondary-side windings Ws are respectively coupled to the primary-side windings Wp, and commonly connected to the same node to form the secondary-side common windings WCs. Specifically, the first terminal of each secondary-side winding Ws is coupled to a secondary-side ground terminal Sgnd, and the second terminal of each secondary-side winding Ws is commonly coupled to a node P. The secondary-side switch circuit 5 incudes a first secondary-side bridge arm 52, a second secondary-side bridge arm 54, and an output capacitor Co, and the first secondary-side bridge arm 52 and the second secondary-side bridge arm 54 are connected to the output capacitor Co in parallel. Moreover, the load 200 is coupled to the output capacitor Co, and receives the DC power source Pdc through the output capacitor Co. The first secondary-side bridge arm 52 includes a first secondary-side switch Qs1 and a second secondary-side switch Qs2 connected in series, and a first secondary-side node Ps1 is formed between the first secondary-side switch Qs1 and the second secondary-side switch Qs2. Similarly, the second secondary-side bridge arm 54 includes a third secondary-side switch Qs3 and a fourth secondary-side switch Qs4 connected in series, and a second secondary-side node Ps2 is formed between the third secondary-side switch Qs3 and the fourth secondary-side switch Qs4.

The node P of the secondary-side winding Ws is coupled to one of the first secondary-side node Ps1 and the second secondary-side node Ps2 (here represented by the first secondary-side node Ps1), and the other is coupled to the secondary-side ground terminal Sgnd. Since one terminal of the secondary-side winding Ws is also coupled to the secondary-side ground terminal Sgnd, two terminals of the secondary-side winding Ws are coupled to the first secondary-side node Ps1 and the second secondary-side node Ps2 respectively. Moreover, the resonant inductor Lr2 and the resonant capacitor Cr2 of the secondary-side resonant tank may be configured similarly to the primary-side resonant tank, and will not be described again here.

In general, the control signal Sc is provided by the controller 6 so that the rectifying bridge arm 22 of the resonant converter 100 can perform full-wave rectification, and the rectified power is then converted into the DC power Pdc with a specific level through the switching circuit 4, the resonant circuit B, and the secondary-side circuit C. Moreover, the resonant converter 100 can also provide a power factor correction (PFC) function through the setting and operation of the controller 6 to increase the power conversion efficiency of the resonant converter 100. In one embodiment, the rectifying bridge arm 22 mainly rectifies the AC power source Pac so that the controller 6 controls the switching speed (such as, but not limited to, the mains frequency) of the switch inside the rectifying bridge arm 22 to be slower than the switching speed (such as, but not limited to, 400kHz to 600kHz) of the switch inside the switching circuit 4. Therefore, the rectifying bridge arm 22 may also be referred to as a slow bridge arm, and the switching bridge arms 42, 44 inside the switching circuit 4 may be referred to as a fast bridge arm. This is the casein later disclosures and will not be repeated here.

In addition, in the resonant converter 100 of FIG. 2, the secondary-side windings Ws of the transformers T are directly connected in parallel and are commonly coupled to the same node P, and coupled to the single secondary-side switch circuit 5 through the node P. Therefore, the number of switches on the secondary side can be reduced (compared to three separately converted structures, at least eight switches can be reduced), thereby reducing the power loss of the switches and reducing the number of control signals output by the controller 6. On the other hand, the switches of the present disclosure are all represented by metal oxide semi-field effect transistors (MOSFETs), but they are not limited thereto. All electronic components that may be used as switches should be included in the scope of this embodiment (such as but not limited to, insulated gate bipolar transistors (IGBTs), gallium nitride (GaN) transistors, and other electronic components.

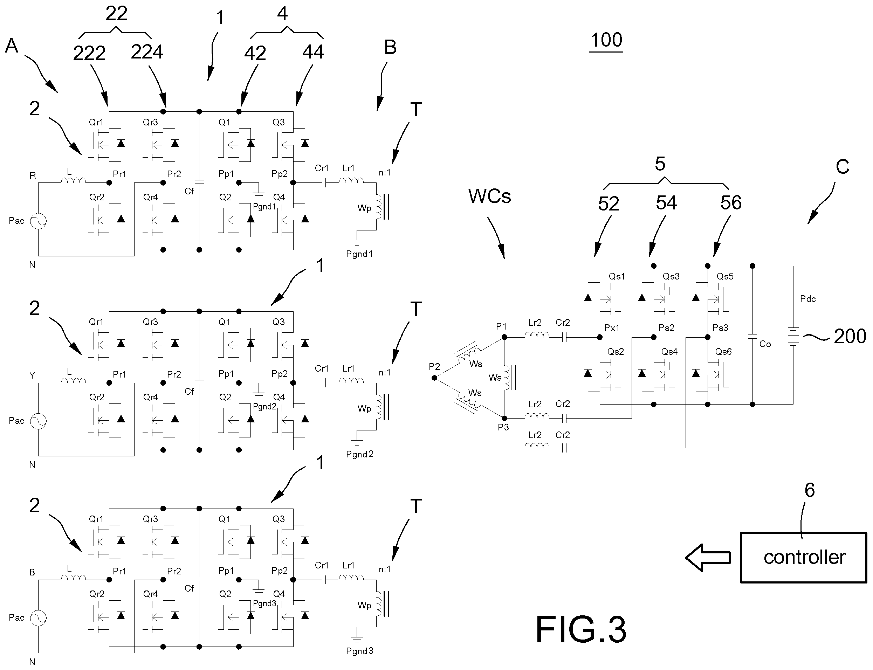

Please refer to FIG. 3, which shows a circuit diagram of the single-stage AC-to-DC resonant converter according to a second embodiment of the present disclosure, and also refer to FIG. 2. The primary-side circuit A of FIG. 3 is exactly the same as that of FIG. 2, and the structure and coupling manner of the primary-side winding Wp of the transformer T are also the same as those of FIG. 2. The difference between the two embodiments is that the structures of the secondary-side common winding WCs and the secondary-side circuit C in FIG. 3 are different from those in FIG. 2. Specifically, the secondary-side winding Ws in FIG. 3 has a delta (Δ) connection structure, and therefore the secondary-side winding Ws is sequentially coupled end-to-end to form the first node P1, the second node P2, and the third node P3.

In addition to the first secondary-side bridge arm 52 and the second secondary-side bridge arm 54 described in FIG. 2, the secondary-side switch circuit 5 further includes a third secondary-side bridge arm 56. The third secondary-side bridge arm 56 is connected to the first secondary-side bridge arm 52 in parallel, and the third secondary-side bridge arm 56 includes a fifth secondary-side switch Qs5 and a sixth secondary-side switch Qs6 connected in series. A third secondary-side node Ps3 is formed between the fifth secondary-side switch Qs5 and the sixth secondary-side switch Qs6, and the first node P1, the second node P2, and the third node P3 are respectively coupled to the first secondary-side node Ps1, the second secondary-side node Ps2, and the third secondary-side node Ps3. The delta wiring structure in FIG. 3 also reduces the number of the secondary-side switches. Moreover, since the secondary-side winding Ws is wound as a three-phase winding and may be sleeved by a single iron core to form a three-phase transformer, the size of the three-phase transformer can be reduced (compared to the use of three transformers in a traditional converter).

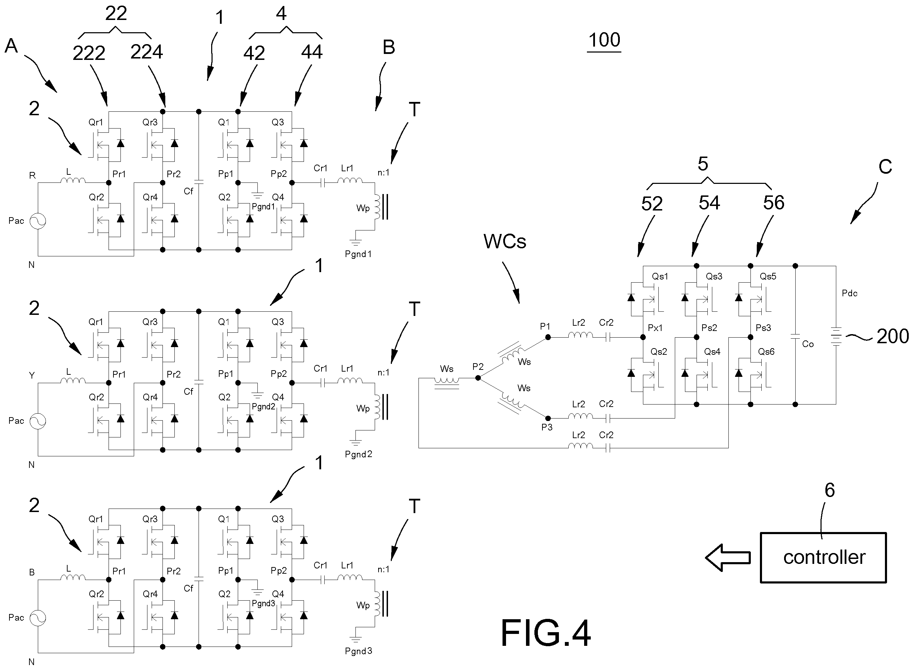

Please refer to FIG. 4, which shows a circuit diagram of the single-stage AC-to-DC resonant converter according to a third embodiment of the present disclosure, and also refer to FIG. 2 to FIG. 3. The primary-side circuit A of FIG. 4 is exactly the same as that of FIG. 2, the structure and coupling manner of the primary-side winding Wp of the transformer T are also the same as those of FIG. 2, and the structure of the secondary-side circuit C is also the same as that of FIG. 3. The difference between FIG. 4 and FIG. 2 to FIG. 3 is that the structures of the secondary-side common windings WCs and the secondary-side circuit C are different from those in FIG. 2 to FIG. 3. Specifically, the secondary-side windings Ws in FIG. 4 has a star (Y) connection structure. Therefore, the first terminals of the secondary-side windings Ws are coupled to the first secondary-side node Ps1, the second secondary-side node Ps2, and the third secondary-side node Ps3 of the switch circuit 5 respectively, and the second terminals of the secondary-side winding Ws are similar to FIG. 2 and are commonly coupled to the single node P. Therefore, the effect brought by the circuit structure of FIG. 4 is similar to that of FIG. 3. It can also reduce the number of the secondary-side switches and can also reduce the size of the three-phase transformer.

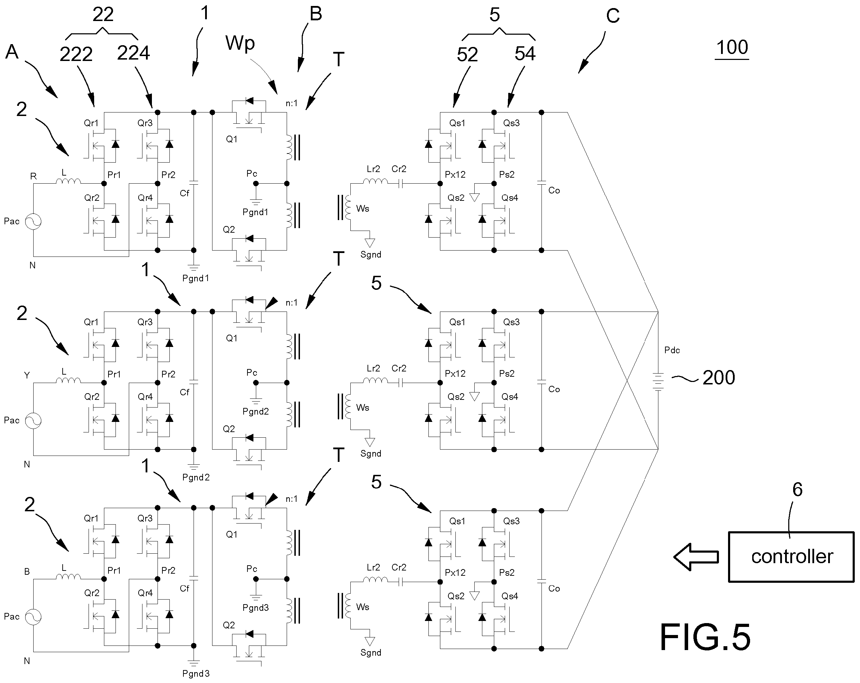

Please refer to FIG. 5, which shows a circuit diagram of the single-stage AC-to-DC resonant converter according to a fourth embodiment of the present disclosure, and also refer to FIG. 2 to FIG. 4. The rectifying circuit 2 of FIG. 5 is exactly the same as that of FIG. 2. The difference is that the secondary-side circuit C includes three secondary-side switch circuits 5, and the circuit structure of the switching circuit 4 is also different from that in FIG. 2. Specifically, the switching circuit 4 includes a first switching switch Q1 and a second switching switch Q2. The first terminal of the first switching switch Q1 and the first terminal of the second switching switch Q2 are coupled to one terminal of the capacitor Cf, and the other terminal of the capacitor Cf is coupled to the primary-side ground terminal Pgnd1, Pgnd2, Pgnd3.

On the other hand, the circuit structure of resonant circuit B is also different from that in FIG. 2. Moreover, the resonant circuit B in FIG. 5 does not have a primary-side resonant tank, and the secondary side includes a secondary-side resonant tank formed by a resonant inductor Lr2 and a resonant capacitor Cr2. Specifically, the primary-side winding Wp of each transformer T includes a first primary-side winding Wp1 and a second primary-side winding Wp2 connected in series, and a center tap terminal Pc is formed between the first primary-side winding Wp1 and the second primary-side winding Wp2. A first terminal of the first primary-side winding Wp1 is coupled to a second terminal of the first switching switch Q1, a first terminal of the second primary-side winding Wp2 is coupled to a second terminal of the second switching switch Q2, and the center tap terminal Pc of the transformer T is coupled to the primary-side ground terminal Pgnd1, Pgnd2, Pgnd3.

In FIG. 5, the circuit structure of the three secondary-side switch circuits 5 is the same as that in FIG. 2, and an input terminal of the secondary-side switch circuit 5 is coupled to the secondary-side winding Ws of the transformer T. Specifically, one of the first secondary-side node Ps1 and the second secondary-side node Ps2 (here represented by the first secondary-side node Ps1) of each secondary-side switch circuits 5 is coupled to the first terminal of the primary-side winding Ws, and the other is coupled to the secondary-side ground terminal Sgnd. Since one terminal of the secondary-side winding Ws is also coupled to the secondary-side ground terminal Sgnd, two terminals of the secondary-side winding Ws are coupled to the first secondary-side node Ps1 and the second secondary-side node Ps2 respectively. Moreover, the resonant inductor Lr2 and the resonant capacitor Cr2 of the secondary-side resonant tank may be configured similarly to the primary-side resonant tank as shown in FIG. 2, and will not be described again here.

Referring again to FIG. 5, the three secondary-side switch circuits 5 are independent of each other, and the output terminals are coupled in parallel to jointly supply the load 200. Specifically, first terminals of the output capacitors Co of the three secondary-side switch circuits 5 are commonly coupled to form a positive output terminal, and second terminals of the output capacitors are commonly coupled to form a negative output terminal. The positive output terminal and the negative output terminal are coupled to the load 200 to provide power to the load 200. In summary, since the switching circuit 4 of each phase in FIG. 5 only uses two switches (i.e., the first switching switch Q1 and the second switching switch Q2), it can reduce the number of switches in the primary-side switch circuit 1.

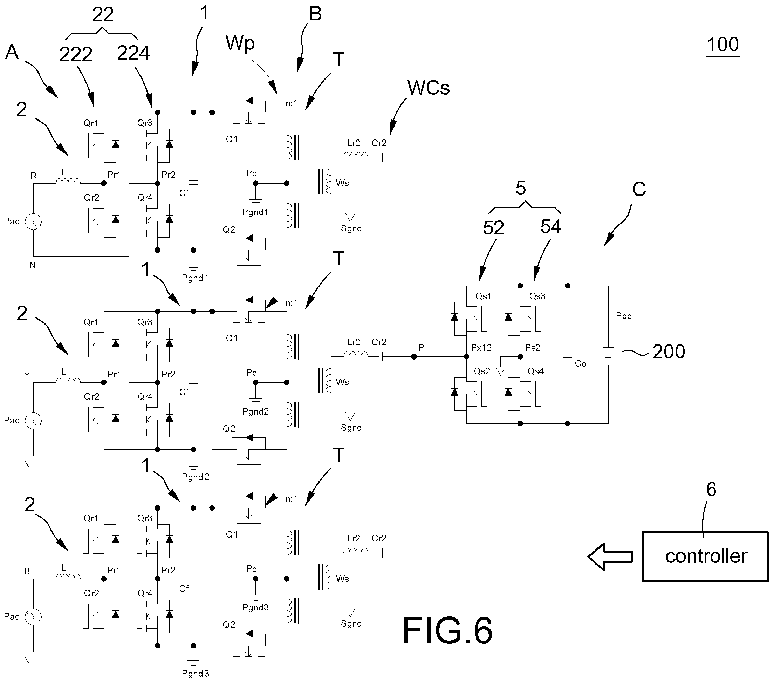

Please refer to FIG. 6, which shows a circuit diagram of the single-stage AC-to-DC resonant converter according to a fifth embodiment of the present disclosure, and also refer to FIG. 2 to FIG. 5, especially FIG. 2 and FIG. 5. The circuit structure of FIG. 6 is a combination of partial circuit structures of FIG. 2 and FIG. 5, and can achieve the corresponding effects described above. Specifically, the primary-side circuit A of FIG. 6 is the same as the primary-side circuit A of FIG. 5, and the secondary-side circuit C of FIG. 6 is the same as the secondary-side circuit C of FIG. 2. Moreover, the circuit structure of the primary-side winding Wp in FIG. 6 is the same as that in FIG. 5, and is also a center-tap structure. The secondary-side winding Ws is a structure connected to the same node P as shown in FIG. 2. The rest of the detailed circuit structure and features may be seen in FIG. 2 and FIG. 5, and will not be described again here.

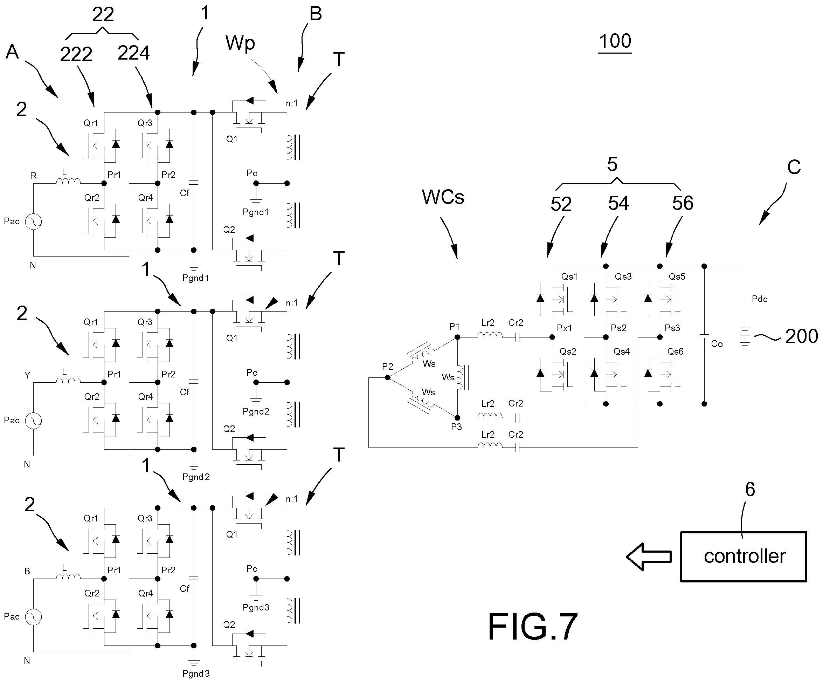

Please refer to FIG. 7, which shows a circuit diagram of the single-stage AC-to-DC resonant converter according to a sixth embodiment of the present disclosure, and also refer to FIG. 2 to FIG. 6, especially FIG. 3 and FIG. 5. FIG. 7 is similar to FIG. 6, and the circuit structure of FIG. 7 is a combination of partial circuit structures of FIG. 3 and FIG. 5, and can achieve the corresponding effects described above. Mainly, the secondary-side winding Ws is as shown in FIG. 3, which is a delta connection structure. The rest of the detailed circuit structure and features may be seen in FIG. 3 and FIG. 5, and will not be described again here.

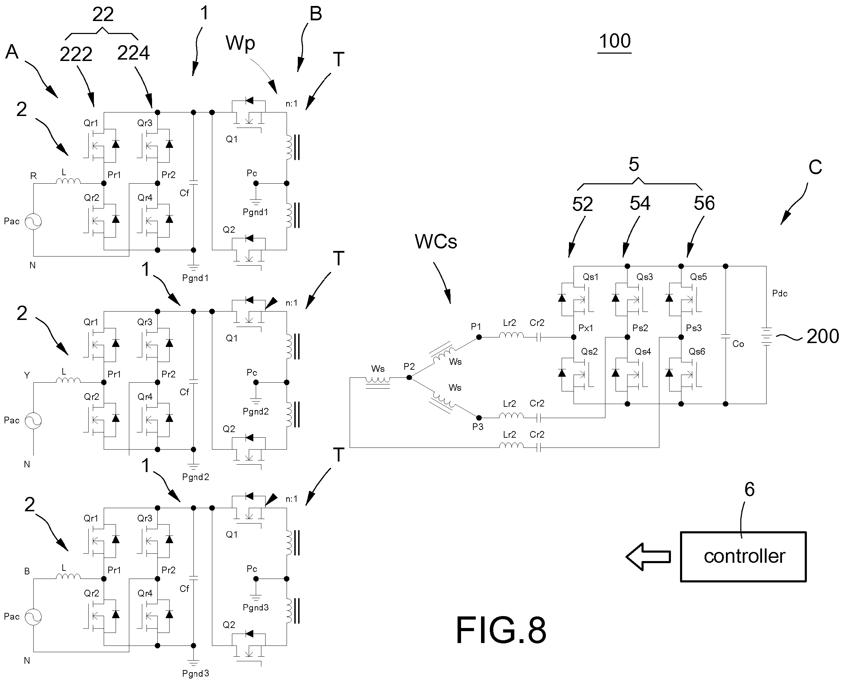

Please refer to FIG. 8, which shows a circuit diagram of the single-stage AC-to-DC resonant converter according to a seventh embodiment of the present disclosure, and also refer to FIG. 2 to FIG. 7, especially FIG. 4 and FIG. 5. FIG. 8 is similar to FIG. 6, and the circuit structure of FIG. 8 is a combination of partial circuit structures of FIG. 4 and FIG. 5, and can achieve the corresponding effects described above. Mainly, the secondary-side winding Ws is as shown in FIG. 4, which is a star connection structure. The rest of the detailed circuit structure and features may be seen in FIG. 4 and FIG. 5, and will not be described again here.

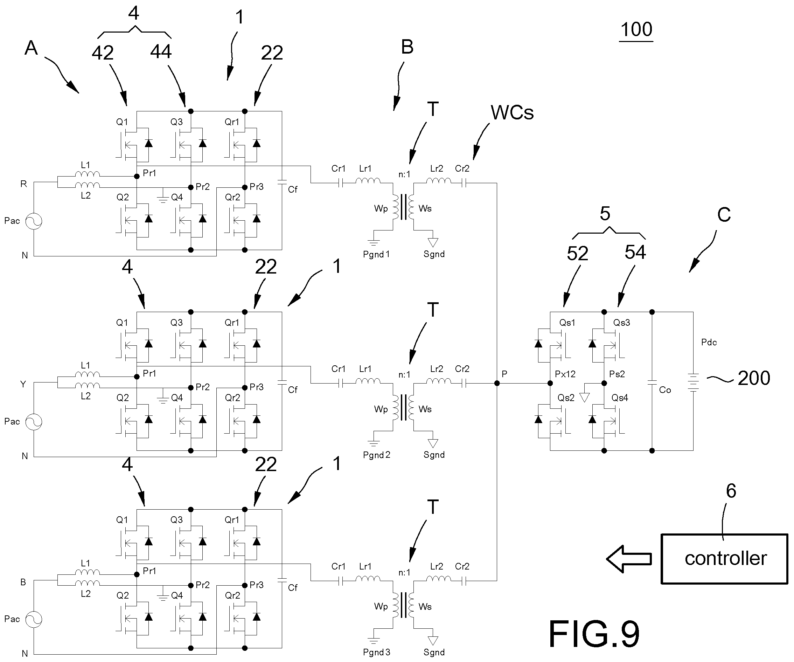

Please refer to FIG. 9, which shows a circuit diagram of the single-stage AC-to-DC resonant converter according to an eighth embodiment of the present disclosure, and also refer to FIG. 2 to FIG. 8. The main feature of FIG. 9 is that the fast bridge arm and the slow bridge arm in the primary-side circuit A are integrated together to form a circuit in which three bridge arms are connected in parallel. Specifically, FIG. 9 is based on the switching circuit 4 of FIG. 2 including the first switching bridge arm 42 and the second switching bridge arm 44, and further connecting to the rectifying bridge arm 22 in parallel to form a circuit in which three bridge arms are connected in parallel. Moreover, the rectifying bridge arm 22 is connected to the capacitor Cf, and the rectifying bridge arm 22 includes a first rectifying switch Qr1 and a second rectifying switch Qr2 connected in series, and a third primary-side node Pp3 is formed between the first rectifying switch Qr1 and the second rectifying switch Qr2. A first terminal of the first rectifying switch Qr1 is coupled to a first terminal of the capacitor Cf, a first terminal of the second rectifying switch Qr2 is coupled to a second terminal of the first rectifying switch Qr1 to form the third primary-side node Pp3, and a second terminal of the second rectifying switch Qr2 is coupled to a second terminal of the capacitor Cf.

In addition, the switching circuit 4 further includes a first inductor L1 and a second inductor L2. A first terminal of the first inductor L1 is coupled to a first terminal of the AC power source Pac, and a second terminal of the first inductor L1 is coupled to the first primary-side node Pp1. A first terminal of the second inductor L2 is coupled to the first terminal of the AC power source Pac, and a second terminal of the second inductor L2 is coupled to the second primary-side node Pp2. As in FIG. 2, one of the first primary-side node Pp1 and the second primary-side node Pp2 is coupled to the primary-side winding Wp, and the other is coupled to the primary-side ground terminal Pgnd1, Pgnd2, Pgnd3. Furthermore, the third primary-side node Pp3 is coupled to the other terminal of the AC power source Pac. In particular, the circuit structure of FIG. 9 is based on the structure of a boost (step-up) conversion circuit, which is similar to a Totem-Pole power factor corrector, that is, the primary-side circuit A can mainly boost (step up) the AC power source Pac, and it also reduces one slow bridge arm. The rest of the circuit structure and functions are similar to FIG. 2, and will not be described again here.

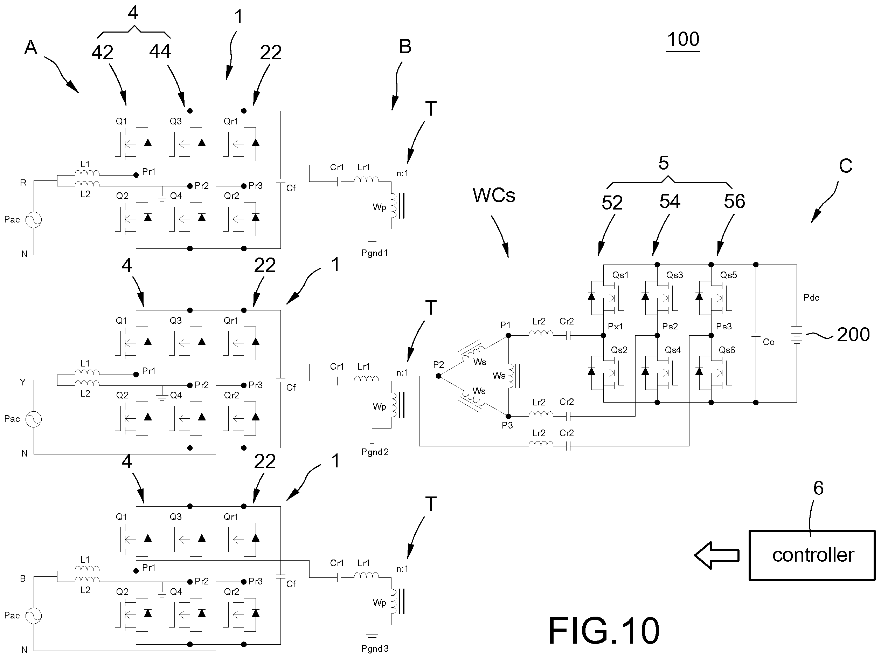

Please refer to FIG. 10, which shows a circuit diagram of the single-stage AC-to-DC resonant converter according to a ninth embodiment of the present disclosure, and also refer to FIG. 2 to FIG. 9, especially FIG. 3 and FIG. 9. The circuit structure of FIG. 10 is a combination of partial circuit structures of FIG. 3 and FIG. 9, and can achieve the corresponding effects described above. Mainly, the secondary-side winding Ws is as shown in FIG. 3, which is a delta connection structure. The rest of the detailed circuit structure and features may be seen in FIG. 3 and FIG. 9, and will not be described again here.

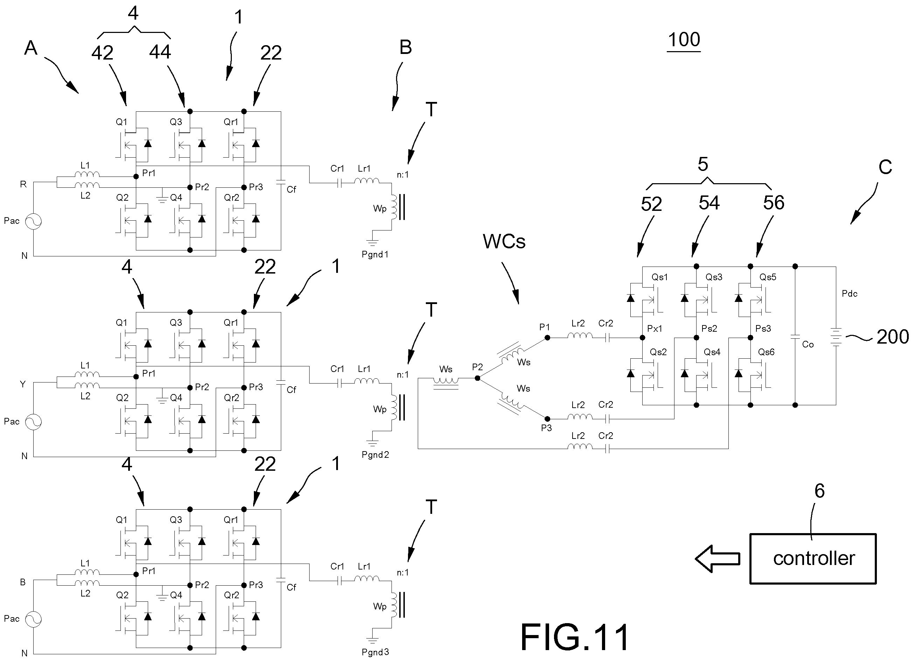

Please refer to FIG. 11, which shows a circuit diagram of the single-stage AC-to-DC resonant converter according to a tenth embodiment of the present disclosure, and also refer to FIG. 2 to FIG. 10, especially FIG. 4 and FIG. 9. The circuit structure of FIG. 11 is a combination of partial circuit structures of FIG. 4 and FIG. 9, and can achieve the corresponding effects described above. Mainly, the secondary-side winding Ws is as shown in FIG. 4, which is a star connection structure. The rest of the detailed circuit structure and features may be seen in FIG. 4 and FIG. 9, and will not be described again here.

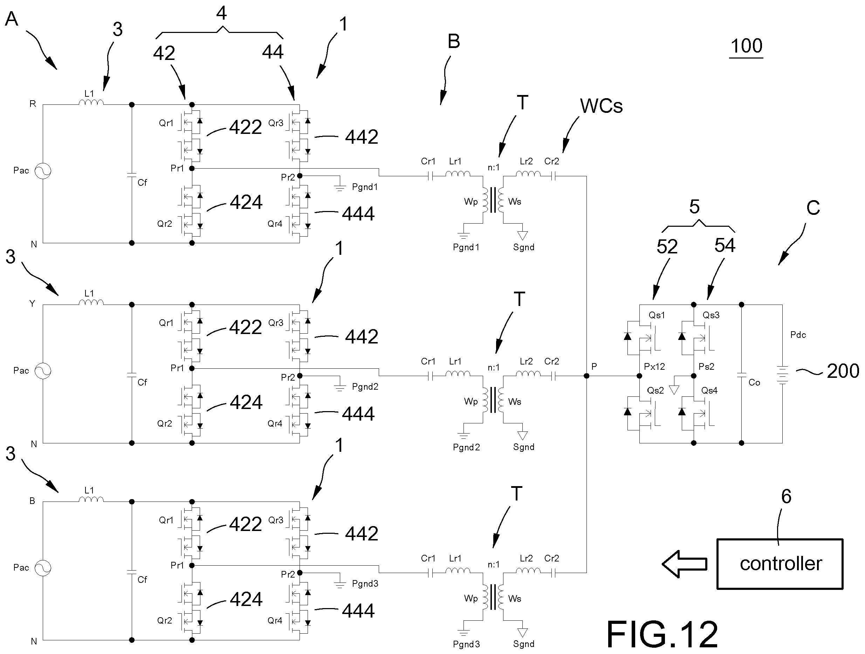

Please refer to FIG. 12, which shows a circuit diagram of the single-stage AC-to-DC resonant converter according to an eleventh embodiment of the present disclosure, and also refer to FIG. 2 to FIG. 11. The main feature of FIG. 12 is that there is no slow bridge arm in the primary-side circuit A, and is replaced by a fast bridge arm with bidirectional turned on and off. Moreover, the resonant circuit B and the secondary-side circuit C are the same as those in FIG. 2. Specifically, each of the three primary-side switch circuits 1 in FIG. 12 includes a filter circuit 3 and a switching circuit 4. The filter circuit 3 is coupled to one phase (R, Y, B) of the three-phase AC power source Pac, and the switching circuit 4 is coupled to the filter circuit 3 and the primary-side winding Wp. Specifically, the filter circuit 3 includes an inductor L and a capacitor Cf. Similar to the description in FIG. 2, the main function of the inductor L and the capacitor Cf is for filtering, rather than intermediate components for storing energy (that is, they are not components that can be used to store large amounts of electricity, such as electrolytic capacitors).

Moreover, a first terminal of the inductor L is coupled to a first terminal of the AC power source Pac, and a first terminal of the capacitor Cf is coupled to a second terminal of the inductor L. A second terminal of the capacitor Cf is coupled to a second terminal of the AC power source Pac, and the switching circuit 4 is connected to the capacitor Cf in parallel. The switching circuit 4 is similar to that of FIG. 2, and also includes a first switching bridge arm 42 and a second switching bridge arm 44. However, the switches Q1 to Q4 of the switching bridge arms 42, 44 are replaced by switch modules 422 to 444, and each switch module 422 to 444 is a bidirectional switch. Specifically, the first switching bridge arm 42 includes a first switch module 422 and a second switch module 424 connected in series, and the first switch module 422 and the second switch module 424 respectively include switches connected in reverse series (i.e., directions of junction diodes are opposite). Therefore, the first switching bridge arm 42 includes more than four switches. A first terminal of the first switch module 422 and a second terminal of the second switch module 424 are coupled to the filter circuit 3 (specifically, the first switching bridge arm 42 is connected to the capacitor Cf in parallel), and a second terminal of the first switch module 422 is coupled to a first terminal of the second switch module 424 to form the first primary-side node Pp1.

The second switching bridge arm 44 includes a third switch module 442 and a fourth switch module 444 connected in series, and the third switch module 442 and the fourth switch module 444 respectively include switches connected in reverse series. Therefore, the second switching bridge arm 44 includes more than four switches. A first terminal of the third switch module 442 and a second terminal of the fourth switch module 444 are coupled to the filter circuit 3 (specifically, the second switching bridge arm 44 is connected to the capacitor Cf in parallel), and a second terminal of the third switch module 442 is coupled to a first terminal of the fourth switch module 444 to form the second primary-side node Pp2. The coupling relationship between the first primary-side node Pp1 and the second primary-side node Pp2 is similar to that of FIG. 2. One of them is coupled to the first terminal of the primary-side winding Wp, and the other is coupled to the second terminal of the primary-side winding Wp and the primary-side ground terminal Pgnd1, Pgnd2, Pgnd3. The rest of the detailed coupling manners are similar to those in FIG. 2, and will not be described again here.

In one embodiment, in addition to the implementation of two switches connected in reverse series, the bidirectional switch also has a variety of implementations with different structures but the same function. Therefore, the structure of the switch modules 422 to 444 may be selectively replaced according to actual requirements. That is, any bidirectional switch with bidirectional turned-on/off function should be included in the scope of this embodiment. In addition, the circuit structure and coupling relationship not mentioned in FIG. 12 are similar to those of FIG. 2 and may also achieve similar effects, and will not be described again here.

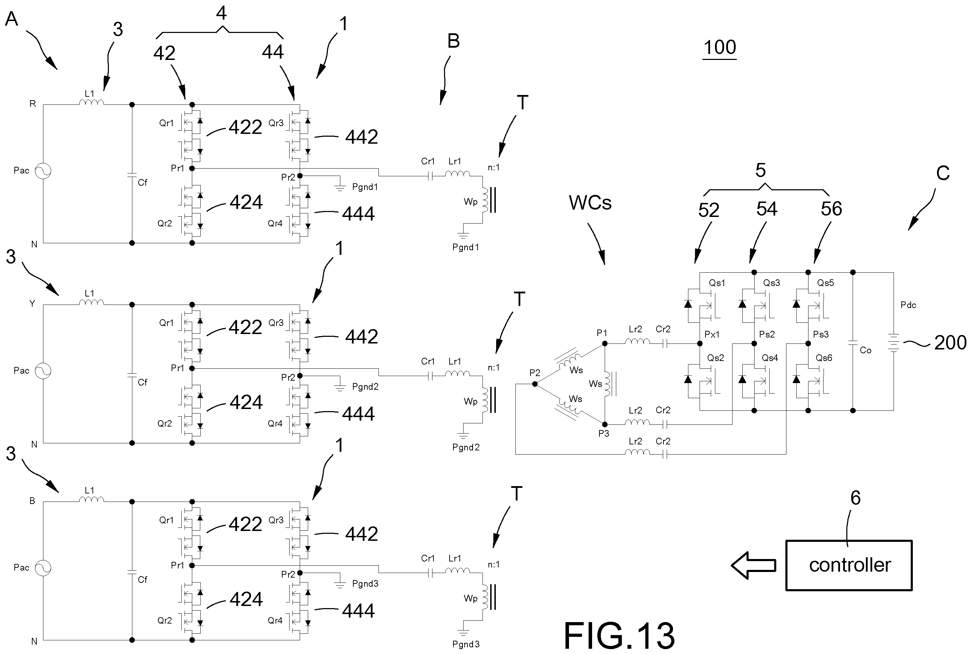

Please refer to FIG. 13, which shows a circuit diagram of the single-stage AC-to-DC resonant converter according to a twelfth embodiment of the present disclosure, and also refer to FIG. 2 to FIG. 12, especially FIG. 3 and FIG. 12. The circuit structure of FIG. 13 is a combination of partial circuit structures of FIG. 3 and FIG. 12, and can achieve the corresponding effects described above. Mainly, the secondary-side winding Ws is as shown in FIG. 3, which is a delta connection structure. The rest of the detailed circuit structure and features may be seen in FIG. 3 and FIG. 12, and will not be described again here.

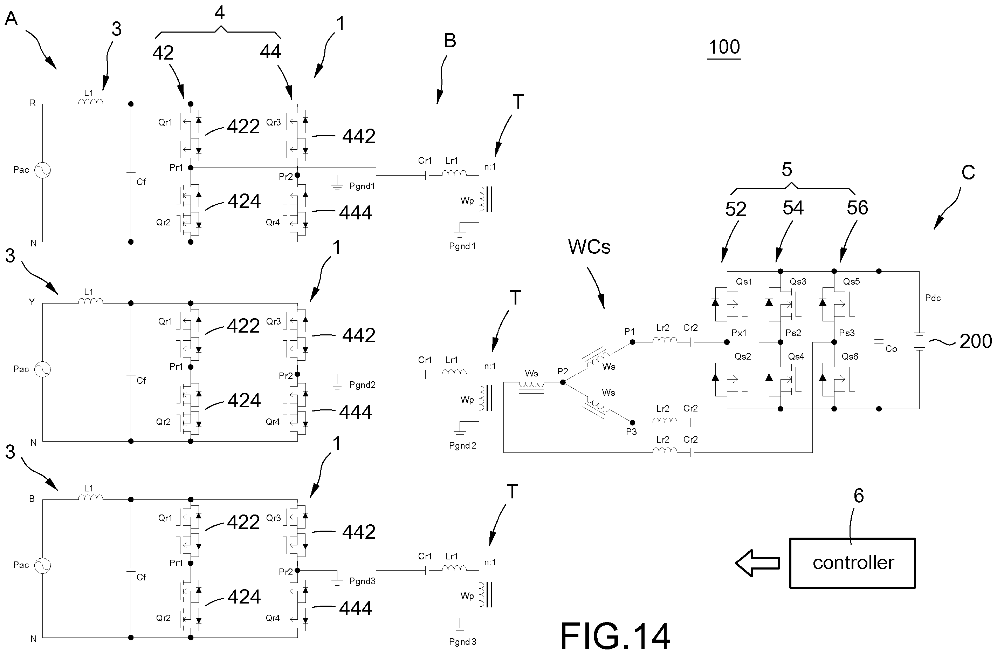

Please refer to FIG. 14, which shows a circuit diagram of the single-stage AC-to-DC resonant converter according to a thirteenth embodiment of the present disclosure, and also refer to FIG. 2 to FIG. 13, especially FIG. 4 and FIG. 12. The circuit structure of FIG. 14 is a combination of partial circuit structures of FIG. 4 and FIG. 12, and can achieve the corresponding effects described above. Mainly, the secondary-side winding Ws is as shown in FIG. 4, which is a star connection structure. The rest of the detailed circuit structure and features may be seen in FIG. 4 and FIG. 12, and will not be described again here.

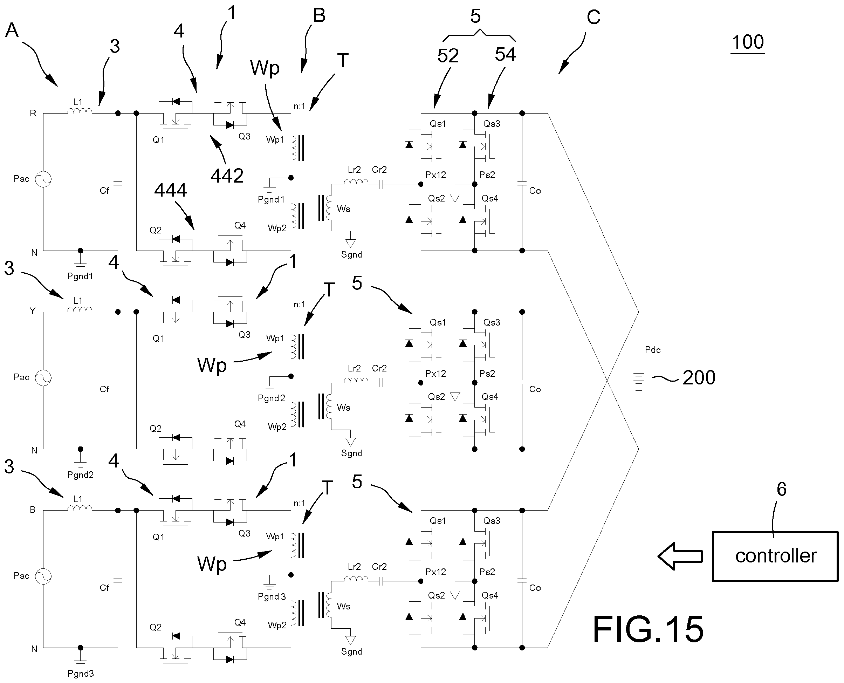

Please refer to FIG. 15, which shows a circuit diagram of the single-stage AC-to-DC resonant converter according to a fourteenth embodiment of the present disclosure, and also refer to FIG. 2 to FIG. 15. The secondary-side circuit C of FIG. 15 is exactly the same as that of FIG. 5, the filter circuit 3 is exactly the same as that of FIG. 12, and the difference is that the switching circuit 4 is not the same. Specifically, the switching circuit 4 of FIG. 15 is similar to that of FIG. 5, but the first switching switch Q1 and the second switching switch Q2 are respectively replaced by the first switch module 422 and the second switch module 424. Moreover, the first switch module 422 and the second switch module 424 are also bidirectional switches, which respectively include switches connected in reverse series (i.e., directions of junction diodes are opposite). Similarly, in addition to the implementation of two switches connected in reverse series, the bidirectional switch also has a variety of implementations with different structures but the same function, which will not be described again here.

Furthermore, the first terminal of the first switch module 422 and the first terminal of the second switch module 424 are coupled to the filter circuit 3 (specifically, coupled to the first terminal of the capacitor Cf, and the second terminal of the capacitor Cf is coupled to the primary-side ground terminal Pgnd1, Pgnd2, Pgnd3), and the second terminal of the first switch module 422 and the second terminal of the second switch module 424 are respectively coupled to the first terminal of the first primary-side winding Wp 1 and the first terminal of the second primary-side winding Wp2. In addition, the other coupling relationships and their achievable functions can be referred to those of FIG. 5 and FIG. 12, and will not be described again here.

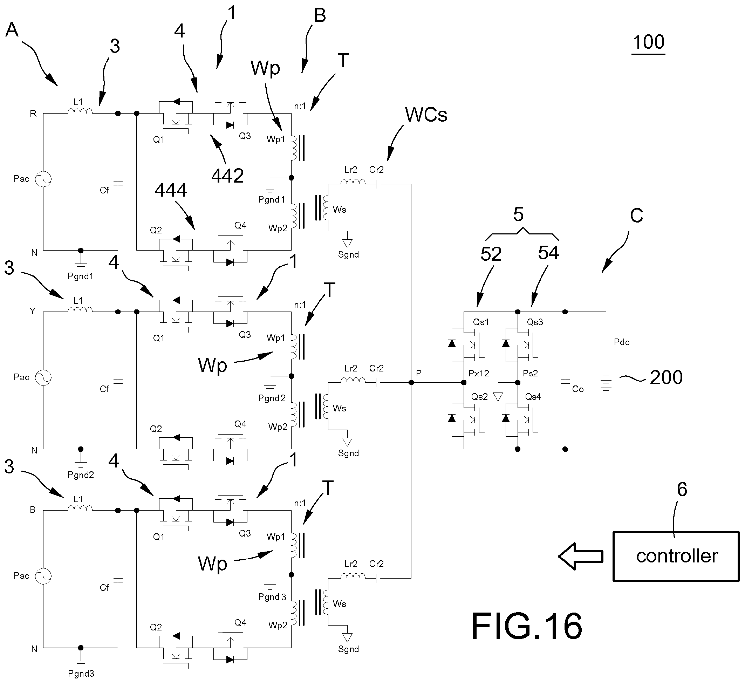

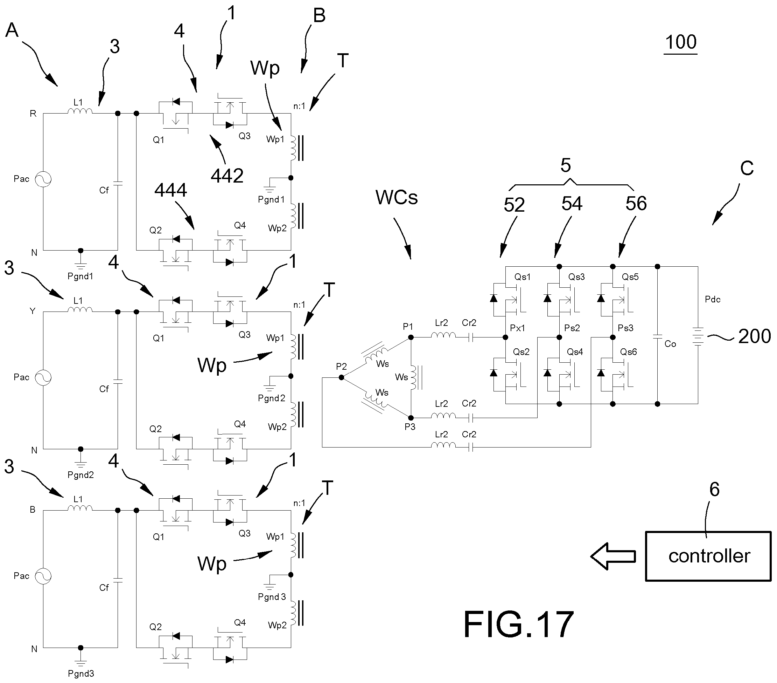

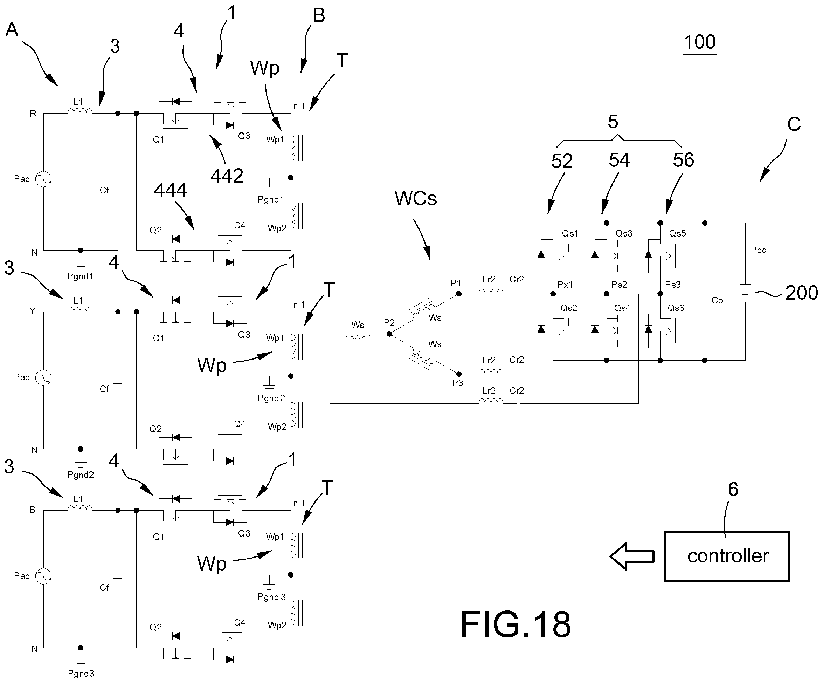

Please refer to FIG. 16, 17, and 18, which show circuit diagrams of the single-stage AC-to-DC resonant converter according to a fifteenth embodiment, a sixteenth embodiment, and a seventeenth embodiment of the present disclosure respectively, and also refer to FIG. 2 to FIG. 14, especially FIG. 2 to FIG. 4 and FIG. 15. The circuit structure of FIG. 16 is a combination of partial circuit structures of FIG. 2 and FIG. 15, the circuit structure of FIG. 17 is a combination of partial circuit structures of FIG. 3 and FIG. 15, and the circuit structure of FIG. 18 is a combination of partial circuit structures of FIG. 4 and FIG. 15, and can achieve the corresponding effects described above. The rest of the detailed circuit structure and features may be seen in FIG. 2 to FIG. 4 and FIG. 15, and will not be described again here.

## Claims

1. A single-stage AC-to-DC resonant converter (100) configured to convert a three-phase AC power source (Pac) into a DC power source (Pdc), the single-stage AC-to-DC resonant converter (100) comprising:
a primary-side circuit (A) comprising three primary-side switch circuits (1), each primary-side switch circuit (1) coupled to one phase (R, Y, B) of the three-phase AC power source (Pac), and each primary-side switch circuit (1) comprising:
a rectifying circuit (2) comprising rectifying bridge arms (22) and a capacitor (Cf) connected in parallel, and
a switching circuit (4) coupled to the capacitor (Cf),
a resonant circuit (B) comprising three transformers (T), primary-side windings (Wp) of the transformers (T) respectively coupled the switching circuits (4) of the primary-side switch circuits (1), and secondary-side windings (Ws) of the transformers (T) form a secondary-side common winding (WCs), and
a secondary-side circuit (C) comprising a secondary-side switch circuit (5), and the secondary-side switch circuit (5) coupled to the secondary-side common winding (WCs).

2. The single-stage AC-to-DC resonant converter (100) as claimed in clam 1, wherein the rectifying circuit (2) further comprises:
an inductor (L) coupled to a first terminal of one phase (R, Y, B) of the three-phase AC power source (Pac),
wherein the rectifying circuit (2) comprises a first rectifying bridge arm (222) and a second rectifying bridge arm (224) connected to the capacitor (Cf) in parallel, and the first rectifying bridge arm (222) and the second rectifying bridge arm (224) are respectively coupled to the inductor (L) and a second terminal of one phase (R, Y, B) of the three-phase AC power source (Pac).

3. The single-stage AC-to-DC resonant converter (100) as claimed in clam 1, wherein the switching circuit (4) comprises:
a first switching switch (Q1), a first terminal of the first switching switch (Q1) coupled to a first terminal of the capacitor (Cf), and a second terminal of the capacitor (Cf) coupled to a primary-side ground terminal (Pgnd1, Pgnd2, Pgnd3), and
a second switching switch (Q2), a first terminal of the second switching switch (Q2) coupled to the first terminal of the capacitor (Cf),
wherein the primary-side winding (Wp) of each transformer (T) comprises a first primary-side winding (Wp1) and a second primary-side winding (Wp2) connected in series, and a center tap terminal (Pc) is formed between the first primary-side winding (Wp1) and the second primary-side winding (Wp2); a first terminal of the first primary-side winding (Wp1) is coupled to a second terminal of the first switching switch (Q1), a first terminal of the second primary-side winding (Wp2) is coupled to a second terminal of the second switching switch (Q2), and the center tap terminal (Pc) is coupled to the primary-side ground terminal (Pgnd1, Pgnd2, Pgnd3).

4. The single-stage AC-to-DC resonant converter (100) as claimed in clam 1, wherein the switching circuit (4) comprises:
a first switching bridge arm (42) connected to the capacitor (Cf) in parallel, and comprising a first switching switch (Q1) and a second switching switch (Q2) connected in series, and a first primary-side node (Pp1) formed between the first switching switch (Q1) and the second switching switch (Q2), and
a second switching bridge arm (44) connected to the capacitor (Cf) in parallel, and comprising a third switching switch (Q3) and a fourth switching switch (Q4) connected in series, and a second primary-side node (Pp2) formed between the third switching switch (Q3) and the fourth switching switch (Q4),
wherein one of the first primary-side node (Pp1) and the second primary-side node (Pp2) is coupled to a primary-side ground terminal (Pgnd1, Pgnd2, Pgnd3), and the other of the first primary-side node (Pp1) and the second primary-side node (Pp2) is coupled to the primary-side winding (Wp) of one of the transformers (T),
wherein the rectifying bridge arm (22) is connected to the capacitor (Cf) in parallel, and comprises:
a first rectifying switch (Qr1), a first terminal of the first rectifying switch (Qr1) coupled to a first terminal of the capacitor (Cf), and
a second rectifying switch (Qr2), a first terminal of the second rectifying switch (Qr2) coupled to a second terminal of the first rectifying switch (Qr1) to form a third primary-side node (Pp3), and a second terminal of the second rectifying switch (Qr2) coupled to a second terminal of the capacitor (Cf),
wherein the switching circuit (4) further comprises:
a first inductor (L1), a first terminal of the first inductor (L1) coupled to a first terminal of one phase (R, Y, B) of the three-phase AC power source (Pac), and a second terminal of the first inductor (L1) coupled to the first primary-side node (Pp1), and
a second inductor (L2), a first terminal of the second inductor (L2) coupled to the first terminal of one phase (R, Y, B) of the three-phase AC power source (Pac), and a second terminal of the second inductor (L2) coupled to the second primary-side node (Pp2),
wherein the third primary-side node (Pp3) is coupled to a second terminal of one phase (R, Y, B) of the three-phase AC power source (Pac).

5. A single-stage AC-to-DC resonant converter (100) configured to convert a three-phase AC power source (Pac) into a DC power source (Pdc), the single-stage AC-to-DC resonant converter (100) comprising:
a primary-side circuit (A) comprising three primary-side switch circuits (1), and each primary-side switch circuit (1) comprising:
a filter circuit (3) coupled to one phase (R, Y, B) of the three-phase AC power source (Pac), and
a switching circuit (4) coupled to the filter circuit (3),
a resonant circuit (B) comprising three transformers (T), primary-side windings (Wp) of the transformers (T) respectively coupled the switching circuits (4) of the primary-side switch circuits (1), and secondary-side windings (Ws) of the transformers (T) form a secondary-side common winding (WCs), and
a secondary-side circuit (C) comprising a secondary-side switch circuit (5), and the secondary-side switch circuit (5) coupled to the secondary-side common winding (WCs).

6. The single-stage AC-to-DC resonant converter (100) as claimed in claim 1 or claim 5, wherein the secondary-side switch circuit (5) comprises:
a first secondary-side bridge arm (52) comprising a first secondary-side switch (Qs1) and a second secondary-side switch (Qs2) connected in series, and a first secondary-side node (Ps1) formed between the first secondary-side switch (Qs1) and the second secondary-side switch (Qs2), and
a second secondary-side bridge arm (54) connected to the first secondary-side bridge arm (52) in parallel, and comprising a third secondary-side switch (Qs3) and a fourth secondary-side switch (Qs4) connected in series, and a second secondary-side node (Ps2) formed between the third secondary-side switch (Qs3) and the fourth secondary-side switch (Qs4), and
wherein first terminals of the secondary-side windings (Ws) of the transformers (T) are coupled to a secondary-side ground terminal (Sgnd), and second terminals of the secondary-side windings (Ws) of the transformers (T) are commonly coupled to a node (P); the node (P) is coupled to one of the first secondary-side node (Ps1) and the second secondary-side node (Ps2), and the other of the first secondary-side node (Ps1) and the second secondary-side node (Ps2) is coupled to the secondary-side ground terminal (Sgnd).

7. The single-stage AC-to-DC resonant converter (100) as claimed in claim 1 or claim 5, wherein the secondary-side switch circuit (5) comprises:
a first secondary-side bridge arm (52) comprising a first secondary-side switch (Qs1) and a second secondary-side switch (Qs2) connected in series, and a first secondary-side node (Ps1) formed between the first secondary-side switch (Qs1) and the second secondary-side switch (Qs2),
a second secondary-side bridge arm (54) connected to the first secondary-side bridge arm (52) in parallel, and comprising a third secondary-side switch (Qs3) and a fourth secondary-side switch (Qs4) connected in series, and a second secondary-side node (Ps2) formed between the third secondary-side switch (Qs3) and the fourth secondary-side switch (Qs4), and
a third secondary-side bridge arm (56) connected to the first secondary-side bridge arm (52) in parallel, and comprising a fifth secondary-side switch (Qs5) and a sixth secondary-side switch (Qs6) connected in series, and a third secondary-side node (Ps3) formed between the fifth secondary-side switch (Qs5) and the sixth secondary-side switch (Qs6),
wherein first terminals of the secondary-side windings (Ws) of the transformers (T) are respectively coupled to the first secondary-side node (Ps1), the second secondary-side node (Ps2), and the third secondary-side node (Ps3), and second terminals of the secondary-side windings (Ws) of the transformers (T) are commonly coupled to a node (P).

8. The single-stage AC-to-DC resonant converter (100) as claimed in claim 1 or claim 5, wherein the secondary-side switch circuit (5) comprises:
a first secondary-side bridge arm (52) comprising a first secondary-side switch (Qs1) and a second secondary-side switch (Qs2) connected in series, and a first secondary-side node (Ps1) formed between the first secondary-side switch (Qs1) and the second secondary-side switch (Qs2),
a second secondary-side bridge arm (54) connected to the first secondary-side bridge arm (52) in parallel, and comprising a third secondary-side switch (Qs3) and a fourth secondary-side switch (Qs4) connected in series, and a second secondary-side node (Ps2) formed between the third secondary-side switch (Qs3) and the fourth secondary-side switch (Qs4), and
a third secondary-side bridge arm (56) connected to the first secondary-side bridge arm (52) in parallel, and comprising a fifth secondary-side switch (Qs5) and a sixth secondary-side switch (Qs6) connected in series, and a third secondary-side node (Ps3) formed between the fifth secondary-side switch (Qs5) and the sixth secondary-side switch (Qs6),
wherein the secondary-side windings (Ws) of the transformers (T) are sequentially coupled end-to-end to form a first node (P1), a second node (P2), and a third node (P3); the first node (P1), the second node (P2), and the third node (P3) are respectively coupled to that first secondary-side node (Ps1), the second secondary-side node (Ps2), and the third secondary-side node (Ps3).

9. The single-stage AC-to-DC resonant converter (100) as claimed in claim 5, wherein the filter circuit (3) comprises:
an inductor (L), a first terminal of the inductor (L) coupled to a first terminal of one phase (R, Y, B) of the three-phase AC power source (Pac), and
a capacitor (Cf), a first terminal of the capacitor (Cf) coupled to a second terminal of the inductor (L), and a second terminal of the capacitor (Cf) coupled to a second terminal of one phase (R, Y, B) of the three-phase AC power source (Pac),
wherein the switching circuit (4) is connected to the capacitor (Cf) in parallel.

10. The single-stage AC-to-DC resonant converter (100) as claimed in claim 5, wherein the switching circuit (4) comprises:
a first switching bridge arm (42) comprising a first switch module (422) and a second switch module (424) connected in series, wherein a first terminal of the first switch module (422) and a second terminal of the second switch module (424) are coupled to the filter circuit (3), and a second terminal of the first switch module (422) is coupled to a first terminal of the second switch module (424) to form a first primary-side node (Pp1), and
a second switching bridge arm (44) connected to the first switching bridge arm (42) in parallel, and comprising a third switch module (442) and a fourth switch module (444) connected in series, wherein a first terminal of the third switch module (442) and a second terminal of the fourth switch module (444) are coupled to the filter circuit (3), and a second terminal of the third switch module (442) is coupled to a first terminal of the fourth switch module (444) to form a second primary-side node (Pp2),
wherein one of the first primary-side node (Pp1) and the second primary-side node (Pp2) is coupled to a first terminal of the primary-side winding (Wp), and the other of the first primary-side node (Pp1) and the second primary-side node (Pp2) is coupled to a second terminal of the primary-side winding (Wp) and a primary-side ground terminal (Pgnd1, Pgnd2, Pgnd3).

11. The single-stage AC-to-DC resonant converter (100) as claimed in claim 5, wherein the switching circuit (4) comprises:
a first switch module (422), a first terminal of the first switch module (422) coupled to the filter circuit (3), and
a second switch module (424), a first terminal of the second switch module (424) coupled to the filter circuit (3),
wherein the primary-side winding (Wp) of each transformer (T) comprises a first primary-side winding (Wp1) and a second primary-side winding (Wp2) connected in series, and a center tap terminal (Pc) is formed between the first primary-side winding (Wp1) and the second primary-side winding (Wp2); a first terminal of the first primary-side winding (Wp1) is coupled to a second terminal of the first switch module (422), a first terminal of the second primary-side winding (Wp2) is coupled to a second terminal of the second switch module (424), and the center tap terminal (Pc) is coupled to a primary-side ground terminal (Pgnd1, Pgnd2, Pgnd3).

12. A single-stage AC-to-DC resonant converter (100) configured to convert a three-phase AC power source (Pac) into a DC power source (Pdc), the single-stage AC-to-DC resonant converter (100) comprising:
a primary-side circuit (A) comprising three primary-side switch circuits (1), each primary-side switch circuit (1) coupled to one phase (R, Y, B) of the three-phase AC power source (Pac), and each primary-side switch circuit (1) comprising a switching circuit (4),
a resonant circuit (B) comprising three transformers (T), primary-side windings (Wp) of the transformers (T) respectively coupled to the switching circuits (4) of the primary-side switch circuits (1), and
a secondary-side circuit (C) comprising three secondary-side switch circuits (5), input terminals of the secondary-side switch circuits (5) coupled to secondary-side windings (Ws) of the transformers (T), and output terminals of the secondary-side switch circuits (5) coupled to each other in parallel.

13. The single-stage AC-to-DC resonant converter (100) as claimed in claim 12, wherein each secondary-side switch circuit (5) comprise:
a first secondary-side bridge arm (52) comprising a first secondary-side switch (Qs1) and a second secondary-side switch (Qs2) connected in series, and a first secondary-side node (Ps1) formed between the first secondary-side switch (Qs1) and the second secondary-side switch (Qs2), and
a second secondary-side bridge arm (54) connected to the first secondary-side bridge arm (52) in parallel, and comprising a third secondary-side switch (Qs3) and a fourth secondary-side switch (Qs4) connected in series, and a second secondary-side node (Ps2) formed between the third secondary-side switch (Qs3) and the fourth secondary-side switch (Qs4),
wherein one of the first primary-side node (Pp1) and the second primary-side node (Pp2) is coupled to the secondary-side winding (Ws) of one of the transformers (T), and the other of the first primary-side node (Pp1) and the second primary-side node (Pp2) is coupled to a secondary-side ground terminal (Sgnd).

14. The single-stage AC-to-DC resonant converter (100) as claimed in claim 12, wherein each primary-side switch circuit (1) further comprises:
a rectifying circuit (2) comprising rectifying bridge arms (22) and a capacitor (Cf) connected in parallel,
an inductor (L) coupled to a first terminal of one phase (R, Y, B) of the three-phase AC power source (Pac),
a first switch module (422), a first terminal of the first switch module (422) coupled to the capacitor (Cf), and
a second switch module (424), a first terminal of the second switch module (424) coupled to the capacitor (Cf),
wherein the primary-side winding (Wp) of each transformer (T) comprises a first primary-side winding (Wp1) and a second primary-side winding (Wp2) connected in series, and a center tap terminal (Pc) is formed between the first primary-side winding (Wp1) and the second primary-side winding (Wp2); a first terminal of the first primary-side winding (Wp 1) is coupled to a second terminal of the first switch module (422), a first terminal of the second primary-side winding (Wp2) is coupled to a second terminal of the second switch module (424), and the center tap terminal (Pc) is coupled to a primary-side ground terminal (Pgnd1, Pgnd2, Pgnd3).

15. The single-stage AC-to-DC resonant converter (100) as claimed in clam 12, wherein each primary-side switch circuit (1) further comprises:
a filter circuit (3) comprising an inductor (L) and a capacitor (Cf); a first terminal of the inductor (L) and a second terminal of the capacitor (Cf) respectively coupled to two terminals of one phase (R, Y, B) of the three-phase AC power source (Pac), and a second terminal of the inductor (L) coupled to a first terminal of the capacitor (Cf),
wherein the first terminal of the capacitor (Cf) is coupled to the switching circuit (4), and the second terminal of the capacitor (Cf) is coupled to a primary-side ground terminal (Pgnd1, Pgnd2, Pgnd3),
wherein the switching circuit (4) comprises:
a first switch module (422), a first terminal of the first switch module (422) coupled to the capacitor (Cf), and
a second switch module (424), a first terminal of the second switch module (424) coupled to the capacitor (Cf),
wherein the primary-side winding (Wp) of each transformer (T) comprises a first primary-side winding (Wp1) and a second primary-side winding (Wp2) connected in series, and a center tap terminal (Pc) is formed between the first primary-side winding (Wp1) and the second primary-side winding (Wp2); a first terminal of the first primary-side winding (Wp 1) is coupled to a second terminal of the first switch module (422), a first terminal of the second primary-side winding (Wp2) is coupled to a second terminal of the second switch module (424), and the center tap terminal (Pc) is coupled to a primary-side ground terminal (Pgnd1, Pgnd2, Pgnd3).
